Europäisches Patentamt

European Patent Office

Office européen des brevets

(11) Publication number: **0 024 696**
**B1**

(12) EUROPEAN PATENT SPECIFICATION

(45) Date of publication of patent specification: **12.03.86**

(51) Int. Cl.⁴: **A 01 B 45/02**

(21) Application number: **80104985.9**

(22) Date of filing: **21.08.80**

(54) Turf scarifier and rake device.

(30) Priority: **25.08.79 GB 7929689**

(43) Date of publication of application:
**11.03.81 Bulletin 81/10**

(45) Publication of the grant of the patent:
**12.03.86 Bulletin 86/11**

(84) Designated Contracting States:
**AT BE CH DE FR GB IT LI LU NL SE**

(56) References cited:
**DE-C- 255 086**
**DE-U-7 228 926**
**GB-A-1 540 217**
**US-A-2 800 065**
**US-A-3 564 823**

(73) Proprietor: **Black & Decker Inc.**
**Drummond Plaza Office Park**
**1423 Kirkwood Highway**
**Newark Delaware 19711 (US)**

(72) Inventor: **Jobling, Alan Vivian**
**Waterloo Cottage Goring-on-Thames**
**Reading RG 8 ILL (GB)**
Inventor: **Crisp, David John**
**32 St. Stephens Gardens**
**London W2 (GB)**

(74) Representative: **Pike, Harold John et al**
**Abel & Imray Northumberland House**
**303-306 High Holborn**
**London, WC1V 7LH (GB)**

Courier Press, Leamington Spa, England.

# Description

This invention relates to a turf scarifier and rake device.

It has been determined that in order to produce and maintain a high grade lawn, it is necessary to provide the conditions which will encourage the growth of the finer turf grasses. Such conditions, however, at the same time should be hostile to the coarse and surface creeping grasses which are both unsightly. If not controlled such grasses will choke out the finer growth.

Past experience has demonstrated that two of the operations which are essential to achieving these conditions are periodically scarifying the turf in order to remove dead mat and moss. The second operation includes the regular raking of the surface of the lawn to lift up the stolons of creeping grasses and weeds so that these can be cut short by subsequent mowing or scything or provision may be made for uprooting the offensive grasses and weeds. It is also necessary from time to time to remove surface debris such as leaves, twigs and small stones.

It will be obvious that for the average amateur gardener the only means available for performing these tasks is laborious hand raking with a wire rake or similar tool, or brushing and removal of the debris by hand in order to produce a well manicured lawn. These operations are both very time consuming and extremely tiring so that relatively few gardeners are able or willing to perform them as often as is needed or desirable. Furthermore, it is generally recommended that moss should be chemically killed before removal to prevent the moss from spreading, requiring yet another operation.

Mechanical scarifying equipment is available for professional use on golf courses, sports grounds and the like, but such machines require a certain degree of skill to operate and in unskilled hands could cause excessive damage or be themselves seriously damaged by striking hard obstructions or surfaces. They are also generally too heavy and cumbersome for use in the confined areas of the average domestic garden and do require that the turf should be reasonably free from undulations. Finally, of course, as would be expected such equipment is very costly.

Although hand propelled rotary brushes and suction cleaners are available for clearing surface debris they have no other use and can only be justified if large areas of turf are involved.

U.S. Patent 3,564,823 discloses a manually operated power rake having a carriage and a tine reel rotatably mounted in the carriage. The tine reel includes a frame having a central shaft supporting rods parallel thereto and having a plurality of coil spring tines threaded thereon, each coil spring having an outwardly extending active end adapted to engage the turf during operation and a reactive end abutting the central shaft in response to deflection of the tine as the power rake is moved over the turf.

In U.S. Patent 2,800,065 is disclosed a rotary tiller or cultivator having a tine assembly comprising a plurality of disk carriers axially stacked on a rotatable shaft for rotation therewith. Each disk carrier has a plurality of outwardly facing open pockets having looped ends of tines bolted therein. The disk carriers are angularly positioned on and driven by the shaft by a keyway in each disk carrier engaging a key carried by the shaft. Each disk carrier is provided with two such keyways so that each disk carrier can occupy one of two positions and the disk carriers are thus alternately angularly offset.

## Summary of the Invention

According to one aspect of the present invention there is provided a turf scarifier and rake device having a carriage, a tine assembly rotatably mounted in the carriage, and a prime mover operatively connected to rotate the tine assembly, wherein the tine assembly comprises a plurality of axially aligned carriers stacked on a shaft for rotation in unison and a plurality of tines, the carriers have open pockets and means for retaining the tines in the open pockets, the tines comprise coil springs, extend outwardly from the pockets and have elongate active ends for operating on the turf when the device is operated and reactive ends, characterized in that the carriers have projections engaging in recesses of adjacent carriers to connect the carriers drivingly together, the projections and the recesses being positioned on the carriers such that the tines of adjacent carriers are offset circumferentially from one another.

According to another aspect of the present invention there is provided a tine assembly for a turf scarifier and rake device, the tine assembly comprising a plurality of axially aligned carriers stacked on a shaft for rotation in unison and a plurality of tines, the carriers having open pockets and means for retaining the tines in the open pockets, the tines comprising coil springs, extending outwardly from the pockets and having elongate active ends for operating on the turf during use of the assembly and reactive ends, characterized in that the carriers have projections engaging in recesses of adjacent carriers to connect the carriers drivingly together, the projections and the recesses being positioned on the carriers such that the tines of adjacent carriers are offset circumferentially from one another.

The carriers may all be of the same construction, whereby the same circumferential offset is provided between the tines of any two adjacent carriers. The circumferential offset between the carriers may be an angle of 6° around the shaft.

Each tine may be retained in position in the respective pocket by virtue of the stacking of one carrier beside another.

The projections may be in the form of posts and the tines may be mounted on the posts.

Each pocket may have a shorter wall and a longer wall, the reactive end of the tine engaging against the longer wall.

Each carrier may have several pockets each having a tine retained therein.

In an embodiment of the invention the tine arrangement comprises a cylindrical configuration consisting of two or more rows of radially disposed teeth or tines positioned symmetrically and helically about the central horizontal shaft. When the cylinder is rotated the tines are forced through the surface of the turf to a depth which can be pre-set by a suitable means of adjustment according to requirements. The helix angle of the rows of tines is preferably such that the first tine in any one row is in the same axial plane as the last tine of the preceding row, thus ensuring a substantially constant torque resistance. In use, the tine carrying means is rotationally driven by an electric motor or other suitable power source at a speed sufficient to ensure that when the machine is propelled forward at a normal walking pace successive tines make contact with the turf in a substantially continuous line.

It will be appreciated that the power source may also be employed to propel the device in a forward direction by driving the wheels or rollers. The preferred embodiment contemplates that it should be hand propelled and therefore a suitable upright inclined handle is provided. Thereby the forward speed can be instantly adjusted according to conditions and at the same time the device can be given a reciprocating motion, that is, can be moved repeatedly forwards and backwards over stubborn areas of moss, dead mat and/or unwanted growth. In fact the direction of rotation of the helix is such that forward propulsion is somewhat assisted thereby reducing the effort required by the operator of the device.

If the teeth or tines were rigid elements and, further, rigidly attached to a central shaft there would undoubtedly be excessive or inadequate penetration into the turf through slight errors in setting the height or where undulations in the surface contours occur. Concomitantly, there would also be enhanced risk of permanent distortion or breakage of the tines if solid obstructions were encountered. It is therefore a feature of the embodiment that the tines, while being stiff enough to ensure adequate scarification, are nevertheless sufficiently flexible to withstand considerable deflection both forwards and backwards relative to the direction of rotation. This feature permits some latitude in setting the height without unduly affecting performance and avoids any risk of damage to the tines.

The device may be set whereby the helix supplies vigorous scarification to the surface and due to the flexibility of the tines will not actually result in digging up the soil. Alternatively, when it is only required to remove surface debris, the device may be set whereby the tines of the helix are clear of the ground so that no untoward damage to the grasses will occur.

A further advantage of employing flexible tines is that having been deflected backwards relative to the direction of rotation on entering the turf, the tines spring forward on leaving it with a much higher top velocity than that imparted by the rotation of the helix, thus projecting the debris upwards and into a supplied bin with greater force than would otherwise be achieved. This debris is then guided by a curved deflector plate into the bin suitably mounted on the forward portion of the device. The bin is designed for easy removal for disposal of the contents in much the same way as the grass catcher on a conventional lawn mower. As most of the debris is collected in the bin, it is not essential to exterminate the moss prior to its removal as its spread is defeated and prolonged and frequent use of the device will greatly discourage its re-establishment.

Brief Description of the Drawings

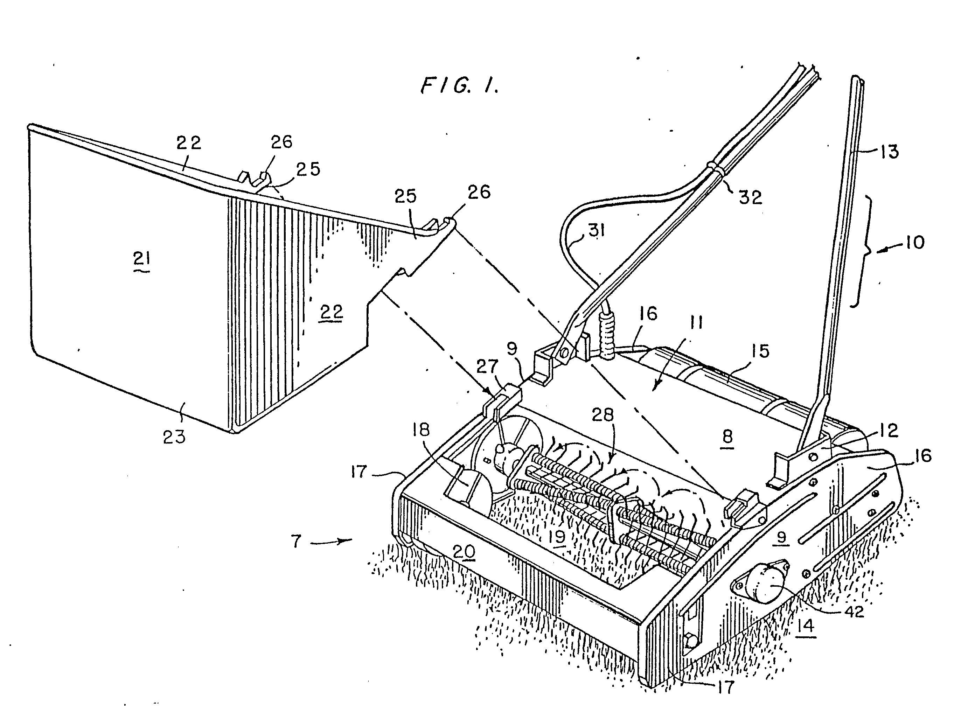

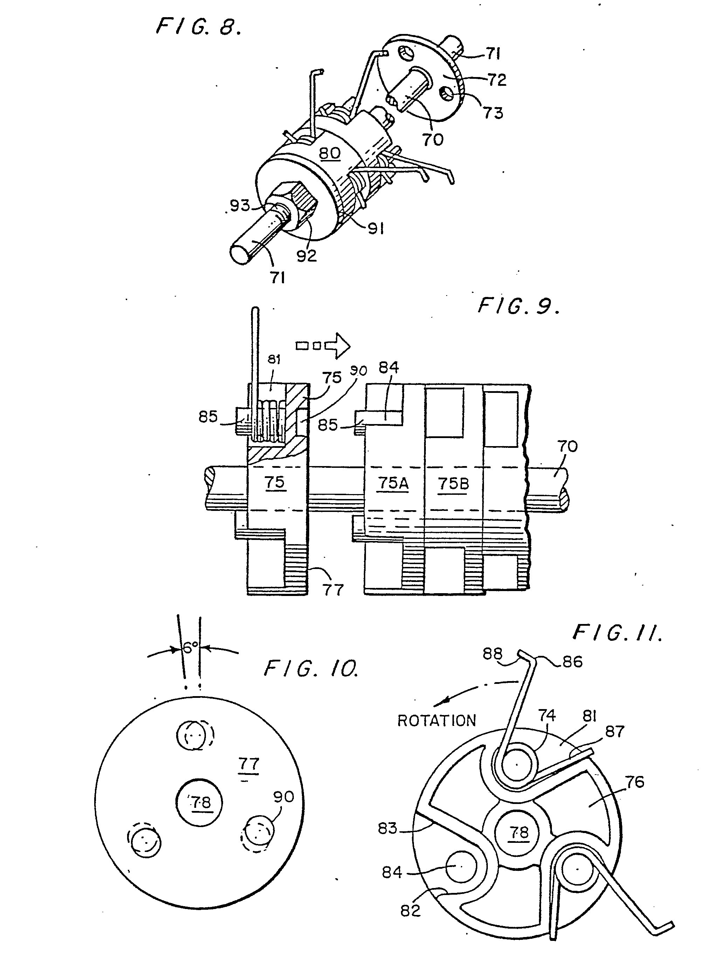

An embodiment of the invention will now be described with reference to the drawings, of which Figures 1 to 7 show a lawn scarifier and rake device having one form of tine assembly which is not an embodiment of the invention and Figures 8 to 11 show an alternative form of tine assembly embodying the invention; in particular:

Figure 1 is a perspective view of the lawn scarifier and rake device;

Figure 2 is a side elevation view of the side having the transmission with an area of interest broken away;

Figure 3 is a top plan view with points of interest in fragmentary form;

Figure 4 is a top plan fragmentary view to show shift of front wheels;

Figure 5 is a fragmentary side elevation partially broken away to show area of interest;

Figure 6 is a cross-sectional view of a tine assembly of the scarifier and rake device;

Figure 7 is a perspective of the tine assembly in fragmentary form;

Figure 8 is a perspective view in fragmentary form of another form of tine assembly, which is a form embodying the invention;

Figure 9 is a side elevation of the other form of the tine assembly with an area of interest in cross-section;

Figure 10 is an end view of a tine carrier of the said other form;

Figure 11 is a view of the other end of the tine carrier of the said other form.

Detailed Description

Attention is directed to Figure 1, at the first instance, for a consideration of the device shown, generally, by reference numeral 10 hereinafter to be discussed. The device includes a carriage 7 encompassing a housing 11 which may be constructed of metal or the like. It has side walls 9 and a top portion 8. The housing 11 has a handle mounting means 12 at each side of the upwardly facing portion of the housing to which the yoke portion of an upstanding bifurcated handle 13 is pivotally secured.

The device 10 is supported on turf 14 at the rear by means of a rearwardly positioned elongated roller 15 which has axle means having ends which fit into adjustable support means located inside rearwardly extending portions 16. At the forward portion 17 of the housing, the device is supplied with wheels 18 which in one embodiment are secured to stub axles horizontally secured internally of the forwardly extending portions 17 of the housing 11.

The housing 11 has a large substantially rectangularly shaped opening 19 in the top portion 8 at the forwardly extending portions 17 of the housing 11 through which debris and grass may be hurled when the device 10 is operated.

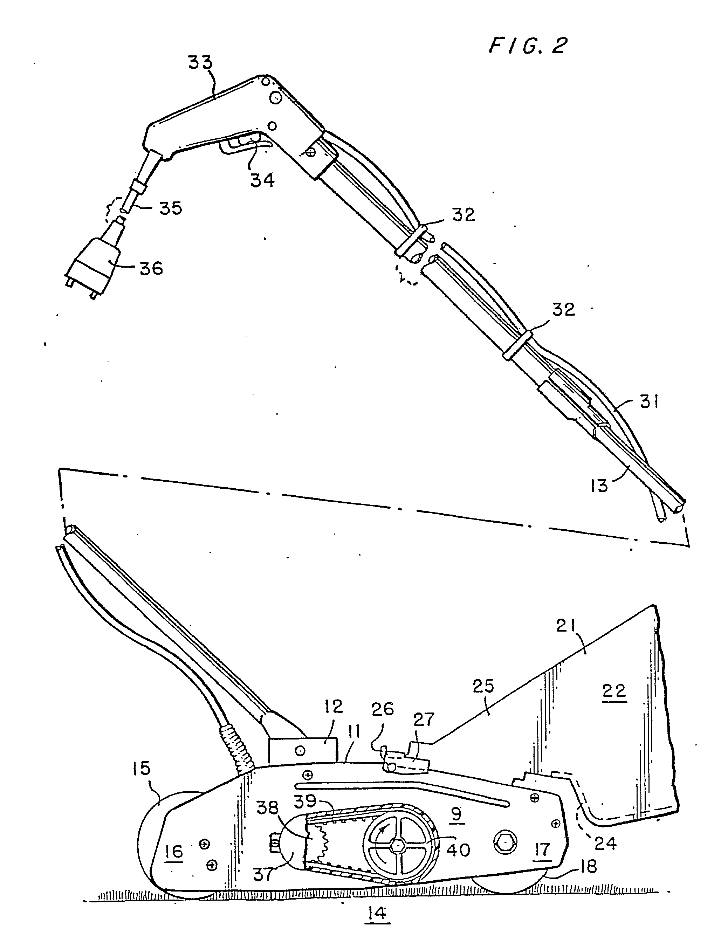

The housing 11 has a bridging portion 20 between the aforementioned forwardly extending portions 17. Figure 1 shows that the device 11 can be provided with an upwardly open facing catcher 21 which has relatively substantial side walls 22 and a frontwardly facing wall 23 and a relatively minor low wall 24 at the side facing the opening 19 of the housing (seen more aptly in Figure 2). The catcher or bin 21 possesses rearwardly extending arms 25 which are integral with the side walls 22 thereof. Each arm 25 terminates in a hook 26 adapted to hookingly engage a retaining member 27 mounted at the top and side portions of the housing.

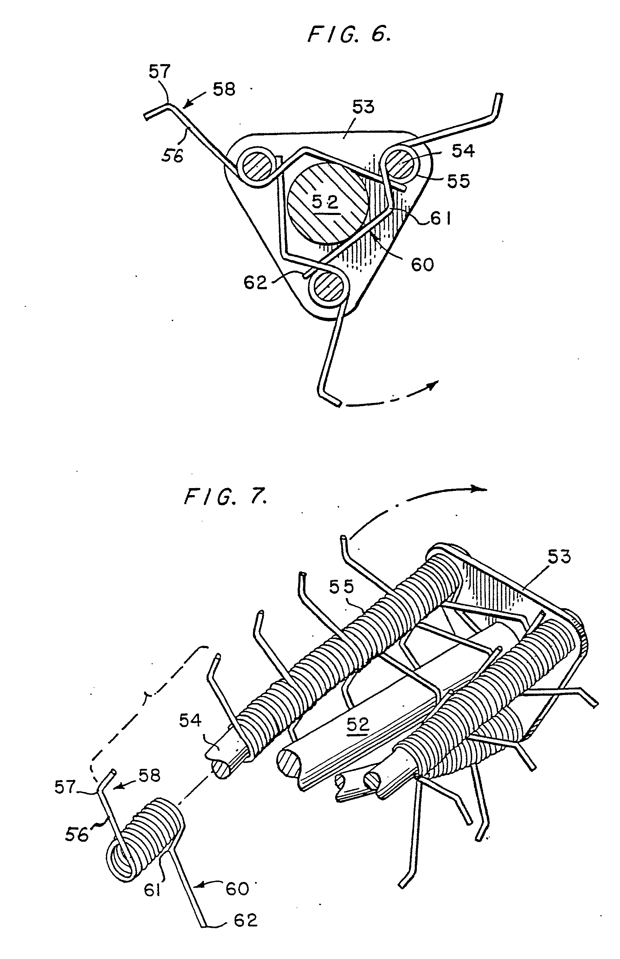

A tine assembly 28 is seen through the aforementioned opening 19. The arrows shown on the drawing describe the rotation of the tine assembly 28 when the device is operated. It is this tine assembly 28 that is adapted and constructed to effectively hurl the debris and/or grass material through the opening as a result of its being rotatably driven by an electric motor 29 (see Figure 5). The electric motor 29 is located behind the tine assembly 28 and is suitably enclosed by the housing 11. The axis of the motor is substantially in the same horizontal plane as the rotational axis of the tine assembly 28. The transmission means 30 between the tine assembly 28 and the electric motor includes a belt 39 as will be discussed below.

The upper surface of the housing 11 has, seen from Figure 1, an electric conduit 31 which is secured to the handle 13 by clips 32.

Having considered the overall configuration of the device as can be best discerned from Figure 1, attention is now more particularly directed to the other figures for an even more detailed consideration. Note, for instance, from Figure 2 that the handle 13 converges to a single hand grip 33 having along the bottom portion an electric finger operated switch 34. The end of the handle has projecting therefrom a relatively short electric cable 35 terminating in a male plug 36 which may be plugged into the female portion of an extension cord (not shown).

The transmission 30 will be seen to be covered with cap 37 removably secured to the side 9 of the housing 11 by conventional means. Therefore external to the housing 11 is the drive gear 38 operatively mounted to the drive shaft of the electric motor 29. A timing type belt 39 operates off this drive gear 38 and around the driven gear 40 which is operatively connected to the tine assembly 28. A number of other features can be seen from Figure 2 that were mentioned above when discussing the positioning of the catcher 21 for instance, especially see the manner of hooking of the catcher 21.

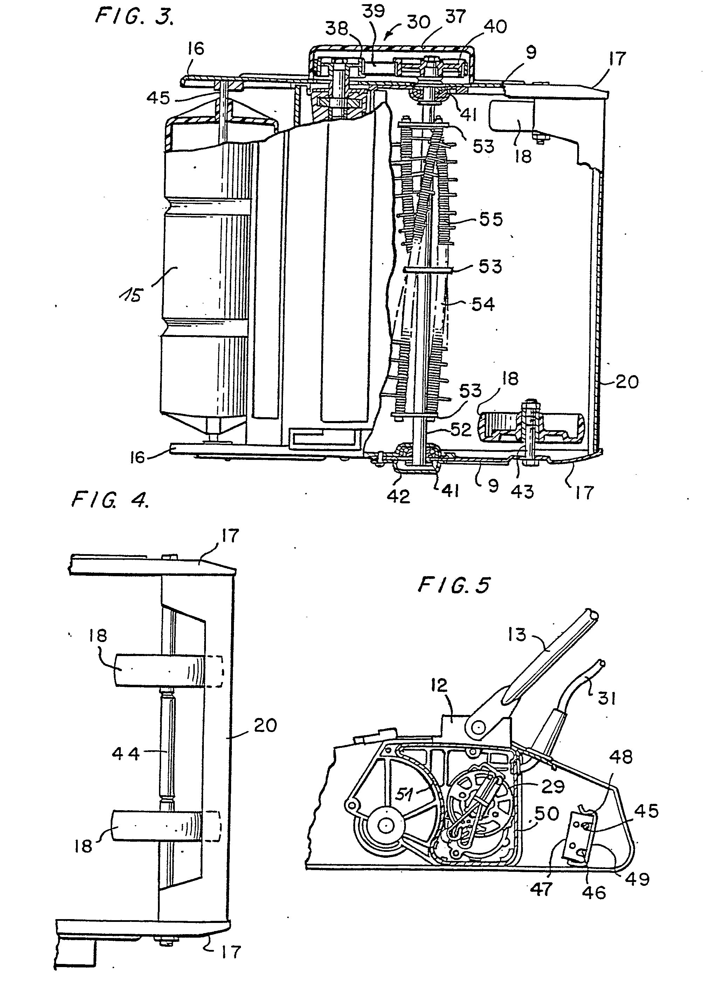

From Figure 3 it will be seen that the tine assembly 28 is suitably journaled in bearings 41 located at oppositely disposed points of the side walls 9. An externally located cap 42 is provided externally at the side wall opposite the transmission 30 to protect one of the bearings 41 but is accessible for lubrication.

Note the manner of mounting the stub axles 43 at opposing sides of the forwardly extending portion 17 of the housing 11 for the wheels 18. In another embodiment, as depicted by Figure 4, the wheels 18 are mounted on an axle 44 that is conventionally mounted in place of the stub axles. By providing a single axle 44, the wheels 18 may be moved therealong somewhat as shown in Figure 4. When a lawn is to be traversed that possesses a crown or ridges, more closely associated wheels will have more of a tendency to ride on such crown or ridges thereby obviating possible scalping effects that may otherwise occur. While the wheels may be located anywhere on the axle, notches are provided to accept spring loaded balls in the bore of the wheels so that the wheels may be positioned in association with such notches and will be retained thereby to prevent migration of the wheels along the axle.

As can be seen from Figure 3, the rearwardly positioned roller 15 is essentially a hollow cylinder mounted on an axle 45 that is restrained into one of several notches 46 in a plastic block 47 secured opposingly and internally of the rearwardly extending portion 16, as can be seen from Figure 5. As stated the axle 45 is restrained by a hinged clip 49 that is hinged at the bottom and clasps the block at a raised portion 48. By moving the axle 45 of the roller 15 to one of the two notches 46 depicted in the block as shown in Figure 5 the roller 15 controls the height of the housing 11 above the grass and thereby the height of the presentation of the tine assembly 28.

Figure 5 is also useful in depicting the fact that a secondary internal housing 50 is provided in which the electric motor 29 is secured in a manner to afford protection from the ambient. The forward portion 9 of the internal housing 50 has an arcuate forwardly facing wall 51 which follows the arc produced by the tine assembly 28 when it rotates and is slightly separated from the tine assembly 28. This arcuate wall 51 acts as a direction imparting chute for the debris and grass picked up by the tine assembly 28, more about which will be disclosed in the following.

Attention is now directed to the tine assembly 28. From Figure 3, it will be seen that the tine assembly includes central support means in the form of a central axle 52. The central axle 52 has rigidly fixed thereon in radial fashion three angularly spaced triangularly shaped plates 53. One plate is located at the end portions of each of the end of the central axle 52, and the third plate centrally therebetween. Each of the three plates have axial bores near their respective apex portions to accommodate helix means in the form of three rods 54. Each rod has an end suitably attached at a bore of one end plate, then each passes through a bore of the middle plate and each is then secured through a bore of the opposite end plate by a suitable means as by welding or upset metal deformation. The plates 53 by their positions produce a tripartite helix as can be seen from Figure 3. From Figure 3 it can be further discerned that each of the rods 54 has serially threaded thereon a plurality of tines comprising tightly wound torsion coil springs 55, each has an active end 58 that terminates in a hook 57 and an essentially passive end 60 that has a sharply bent portion 61 and an elongated straight portion 62. The active end 58 extends substantially radially outwardly while the passive end 60 has a portion of its straight portion 62 in tangential abutment against the central axle 52 as can be seen from Figure 6 when stress is applied against the active ends 58.

The fragmentary portion of the tine assembly 28 shown in Figure 7 demonstrates succinctly that the said torsion coil springs 55 are threaded on the rods 54 in a manner so that each is disposed in the same direction as regards the respective active and passive ends. Each rod 54 passes helically through an angle of 120° in the length of the tine assembly 28 so that the first active end 58 in any one row is in the same axial plane as the last active end 58 in the preceding row.

In operation, the passive end 60 of each tine is restrained by being located between the central axle 52 and an adjacent row of tines. The active end 58 by having a slight hook 57 affords a more effective removal of material from the turf. The design of the torsion coil springs 55 is such that the active ends 58 will withstand considerable torsional deflection in either direction with low relative risk of permanent distortion or breakage or of stressing the metal of the springs beyond the fatigue limit. The clearance between the coils and the rods 54 is just sufficient to prevent the springs 55 from locking at full deflection but small enough to give adequate lateral support to the active ends 58. Of course the coil springs absorb the turning moment imparted to the active ends 58 thereby inhibiting deflection.

Attention is now directed to Figures 8 to 11, for a detailed consideration of a tine carrying arrangement embodying the invention. In this embodiment the tine assembly includes only a single central axle 70 mounted by its respective end portions 71 thereof in journaling fashion as with the aforementioned tine assembly.

An end radial driving plate 72 is suitably affixed to one end portion of the axle 70 as by welding or the like. The plate 72 has three equally spaced apertures 73, the use of which will be discussed hereinafter. In this embodiment the tines 74 comprise coil springs of a slightly different configuration, and are carried by a carrier 75, which may be fabricated of metal or a polymer such as nylon. The carrier has the general shape of a disk having a front 76 and back 77, an axial bore 78 therethrough and a substantial outer circumference 80. The bore is of a diameter whereby it fits smoothly onto central axle 70.

From Figures 9 and 11, particularly, it can be seen that each of the carriers 75 has three outwardly and front facing recesses 81, of a generally U-shaped configuration with one wall 82 comprising one leg shorter than the other wall 83 comprising the other leg. Each of the recesses possesses a post 84 extending axially with regard to the carrier 75 and having a portion 85 extending beyond the front face 76 as can be seen from Figure 9.

A tine 74 is axially positioned onto each of said posts 84. Each of the tines 74 has an active end 86 as heretofore extending out of the recess 81 along the shorter wall 82 of the recess and a reactive end 87. The reactive end 87 extends along the other longer wall 83 of the recess. The active end 86 terminates in a hook 88. The hook 88 operates in the same manner as heretofore and is inhibited from undue deflection by the reactive end 87 in abutment against the longer wall 83 of the recess when the rotation imparted to the carrier 75 as seen in Figure 11 is counterclockwise.

Now, viewing Figures 9 and 10 together, it can be seen that the back of carrier 75 has three equidistant blind bores 90 which are dimensioned and positioned to receive and retain that portion 85 of the post 84 extending beyond the front 76 of the carrier to thereby provide a wall to the recesses 81 and to thereby retain the tine on the post 84. The recesses 81 have the appearance of pockets.

Turning to the perspective of Figure 8, the first disk carrier 75 threaded onto the axle 70 is positioned whereby the portions 85 of the post extending beyond the front of the disk carrier is permitted to extend into and through the apertures 73 of the end plate 72. The second or next disk carrier 75A is then threaded onto the axle 70. However, as the blind bores 90 are offset by about 6° from the aperture 73 of the plate 72, the second disk carrier 75A is angularly offset from the first disk carrier that has been threaded on the axle 70 thereby the radially outwardly facing recesses 81 of the second disc carrier 75A are in different angular position from the recesses 81 of the first disk carrier. Likewise the third disk carrier 75B (see Figure 9) mounted on the axle 70 again has its three blind bores 90 further offset by 6° so that there is a progressive 6° incremental change in the positioning of the radially outwardly facing recesses 81 as can be seen from Figure 9, for instance. In other words the blind bores of the disk carriers when assembled are not in linear axial alignment parallel with the axle.

When all of the disk carriers 75 have been threaded in the progressive manner hereinabove mentioned, an end disk locking plate 91 is secured against the stack of disk carriers and a nut 92 is threaded onto suitable threads 93 of the end portion 71 of the axle whereby the disk carriers are clamped between the end driving plate 72 and the end locking plate 91. The resultant is a unitary device having outwardly radiating tines produced by the active ends 86. The gradual 6° incremental arcuate progression of the recesses 75 results in the active ends of the tines describing a helix.

As the carriers themselves are not keyed directly to the axle, it will be seen that the carriers are rotatably driven when the axle is rotated by virtue of the driving plate 72 which carries the extending portions 85 of the posts of the first carriers. Likewise, then all the other carriers are locked together in the manner as heretofore stated culminated with the end locking plate 91 to provide a unitary stack rotatable in unison with the axle when it is driven.

**Claims**

1. A turf scarifier and rake device having a carriage (11), a tine assembly rotatably mounted in the carriage, and a prime mover operatively connected to rotate the tine assembly, wherein the tine assembly comprises a plurality of axially aligned carriers (75) stacked on a shaft (70) for rotation in unison and a plurality of tines (74), the carriers have open pockets (81) and means for retaining the tines (74) in the open pockets, the tines comprise coil springs, extend outwardly from the pockets (81) and have elongate active ends (86) for operating on the turf when the device is operated and reactive ends (87), characterized in that the carriers (75) have projections (85) engaging in recesses (90) of adjacent carriers to connect the carriers drivingly together, the projections (85) and the recesses (90) being positioned on the carriers (75) such that the tines (74) of adjacent carriers are offset circumferentially from one another.

2. A turf scarifier and rake device as claimed in claim 1, characterized in that the carriers (75) are all of the same construction, whereby the same circumferential offset is provided between the tines (74) of any two adjacent carriers.

3. A turf scarifier and rake device as claimed in claim 2 characterized in that the circumferential offset between the tines of any two adjacent carriers (75) is an angle of 6° around the shaft.

4. A turf scarifier and rake device as claimed in any preceding claim characterized in that each tine (74) is retained in position in the respective pocket (81) by virtue of the stacking of one carrier (75) beside another.

5. A turf scarifier and rake device as claimed in any preceding claim characterized in that the projections (85) are in the form of posts (84, 85) and the tines (74) are mounted on the posts.

6. A turf scarifier and rake device as claimed in any preceding claim characterized in that each pocket (81) has a shorter wall (82) and a longer wall (83), and the reactive end (87) of the tine engages against the longer wall.

7. A turf scarifier and rake device as claimed in any preceding claim characterized in that each carrier (75) has several pockets (81) each having a tine (74) retained therein.

8. A tine assembly for a turf scarifier and rake device, the tine assembly comprising a plurality of axially aligned carriers (75) stacked on a shaft (70) for rotation in unison and a plurality of tines (74), the carriers having open pockets (81) and means for retaining the tines (74) in the open pockets, the tines comprising coil springs, extending outwardly from the pockets (81) and having elongate active ends (86) for operating on the turf during use of the assembly and reactive ends (87), characterized in that the carriers (75) have projections (85) engaging in recesses (90) of adjacent carriers to connect the carriers drivingly together, the projections (85) and the recesses (90) being positioned on the carriers (75) such that the tines (74) of adjacent carriers are offset circumferentially from one another.

9. A tine assembly as claimed in claim 8, characterized in that the carriers (75) are all of the same construction, whereby the same circumferential offset is provided between the tines (74) of any two adjacent carriers.

10. A tine assembly as claimed in claim 9 characterized in that the circumferential offset between the tines (74) of any two adjacent carriers (75) is an angle of 6° around the shaft.

11. A tine assembly as claimed in any of claims 8 to 10 characterized in that each tine (74) is retained in position in the respective pocket (81) by virtue of the stacking of one carrier (75) beside another.

12. A tine assembly as claimed in any of claims 8 to 11 characterized in that the projections (85) are in the form of posts (84, 85) and the tines (74) are mounted on the posts.

13. A tine assembly as claimed in any of claims 8 to 12 characterized in that each pocket (81) has a shorter wall (82) and a longer wall (83), and the reactive end (87) of the tine engages against the longer wall.

14. A tine assembly as claimed in any of claims 8 to 13 characterized in that each carrier (75) has several pockets (81) each having a tine (74) retained therein.

**Patentansprüche**

1. Rasenlüfter- und Harkeinrichtung mit einem Gehäuse (11), einer drehbar im Gehäuse befestigten Zinkenanordnung und einem zur Drehung der Zinkenanordnung betriebsmäßig verbundenen Antrieb, wobei die Zinkenanordnung mehrere axial ausgerichtete Träger (75), die gemeinsam drehbar auf eine Achse (70) aufgesteckt sind, und mehrere Zinken (74) enthält, die Träger offene Taschen (81) und Mittel zum Halten der Zinken (74) in den offenen Taschen aufweisen, die Zinken aus Schraubenfedern bestehen, die sich von den Taschen (81) nach außen erstrecken und längliche aktive Enden (86) zur Arbeit auf dem Rasen bei betriebener Einrichtung sowie gegenwirkende Enden (87) haben, dadurch gekennzeichnet, daß die Träger (75) in Aussparungen (90) benachbarter Träger eingreifende Vorsprünge (85) zur Antriebsverbindung der Träger miteinander aufweisen, wobei die Vorsprünge (85) und die Aussparungen (90) derart an den Trägern (75) ausgebildet sind, daß die Zinken (74) benachbarter Träger in Umfangsrichtung gegeneinander versetzt sind.

2. Rasenlüfter- und Harkeinrichtung nach Anspruch 1, dadurch gekennzeichnet, daß die Träger (75) alle den gleichen Aufbau haben, so daß zwischen den Zinken (74) von jeweils zwei benachbarten Trägern der gleiche Versatz in Umfangsrichtung vorhanden ist.

3. Rasenlüfter- oder Harkeinrichtung nach Anspruch 2, dadurch gekennzeichnet, daß der Umfangsversatz zwischen den Zinken jeweils zweier benachbarter Träger (75) 6 Grad um die Achse beträgt.

4. Rasenlüfter- und Harkeinrichtung nach einem der vorhergehenden Ansprüche, dadurch gekennzeichnet, daß jede Zinke (74) in der entsprechenden Tasche (81) durch das Aufstecken eines Trägers (75) neben den anderen in ihrer Lage gehalten ist.

5. Rasenlüfter- und Harkeinrichtung nach einem der vorhergehenden Ansprüche, dadurch gekennzeichnet, daß die Vorsprünge (85) die Form von Bolzen (84, 85) haben und die Zinken (74) auf den Bolzen befestigt sind.

6. Rasenlüfter- und Harkeinrichtung nach einem der vorhergehenden Ansprüche, dadurch gekennzeichnet, daß jede Tasche (81) eine kürzere Wand (82) und eine längere Wand (83) hat und das gegenwirkende Ende (87) der Zinke in Eingriff mit der längeren Wand steht.

7. Rasenlüfter- und Harkeinrichtung nach einem der vorhergehenden Ansprüche, dadurch gekennzeichnet, daß jeder Träger (75) verschiedene Taschen (81) hat, in der jeweils eine Zinke (74) gehalten ist.

8. Zinkenanordnung für eine Rasenlüfter- und Harkeinrichtung, die Zinkeneinrichtung enthaltend mehrere axial ausgerichtete Träger (75), die zur gemeinsamen Drehung auf eine Achse (70) gesteckt sind, sowie mehrere Zinken (74), die Träger weisen offene Taschen (81) und Mittel zum Halten der Zinken (74) in den offenen Taschen auf, die Zinken bestehen aus Schraubenfedern, die sich von den Taschen (81) nach außen erstrecken und die ein längliches aktives Ende (86) zum Arbeiten auf dem Rasen während der Benutzung der Einsichtung und gegenwirkende Enden (87) haben, dadurch gekennzeichnet, daß die Träger (75) Vorsprünge (85) haben, die in Eingriff mit Aussparungen (90) benachbarter Träger stehen, um die Träger antreibend miteinander zu verbinden, die Vorsprünge (85) und Aussparungen (90) sind so auf den Trägern (75) ausgebildet, daß die Zinken (74) benachbarter Träger im Umfangsrichtung gegeneinander versetzt sind.

9. Zinkenanordnung nach Anspruch 8, dadurch gekennzeichnet, daß die Träge (75) alle gleich aufgebaut sind, so daß zwischen den Zinken (74) von jeweils zwei benachbarten Trägern der gleiche Umfangsversatz vorhanden ist.

10. Zinkenanordnung nach Anspruch 9, dadurch gekennzeichnet, daß der Umfangsversatz zwischen den Zinken (74) von jeweils zwei benachbarten Trägern (75) 6 Grad um die Achse beträgt.

11. Zinkenanordnung nach einem der Ansprüche 8 bis 10, dadurch gekennzeichnet, daß jede Zinke (74) durch das Zusammenstecken eines Trägers (75) neben den anderen in ihrer Lage in der zugehörigen Tasche (81) gehalten ist.

12. Zinkenanordnung nach einem der Ansprüche 8 bis 11, dadurch gekennzeichnet, daß die Vorsprünge (85) die Form von Bolzen (84, 85) haben und die Zinken (74) auf den Bolzen befestigt sind.

13. Zinkenanordnung nach einem der Ansprüche 8 bis 12, dadurch gekennzeichnet, daß jede Tasche (81) eine kürzere Wand (82) und eine längere Wand (83) hat und das gegenwirkende Ende (87) der Zinke in Eingriff mit der längeren Wand steht.

14. Zinkenanordnung nach einem der Ansprüche 8 bis 13, dadurch gekennzeichnet, daß jeder Träger (75) verschiedene Taschen (81) hat, in denen jeweils eine Zinke (74) gehalten ist.

**Revendications**

1. Un dispositif de scarification et ratissage de gazon comportant un chariot (11), un ensemble de dents monté de façon tournante dans le chariot, et une source d'énergie reliée fonctionnellement de façon à faire tourner l'ensemble de dents, cet ensemble de dents comprenant une pluralité de supports (75) alignés axialement et empilés sur un arbre (70) pour tourner à l'unisson et une pluralité de dents (74), les supports comportant des poches ouvertes (81) et des moyens de retenue des dents (74) dans les poches ouvertes, les dents comprenant des ressorts hélicoïdaux, s'étendant à l'extérieur des poches (81) et comportant des extrémités actives allongées (86) pour agir sur le gazon quand le dispositif est utilisé ainsi que des extrémités réactives (87), caractérisé en ce que les supports (75) comportent des saillies (85) s'engageant dans les évidements (90) de supports adjacents pour accoupler les supports en vue de leur entraînement à l'unisson, les saillies (85) et les évidements (90) étant positionnés sur les supports (75) de telle sorte que les dents (74) de supports adjacents soient mutuellement décalées circonférentiellement.

2. Un dispositif de scarification et ratissage de gazon tel que revendiqué dans la revendication 1, caractérisé en ce que les supports (75) ont tous la même construction, le même décalage circonférentiel étant établi entre les dents (74) de deux supports adjacents de chaque paire.

3. Un dispositif de scarification et ratissage de gazon tel que revendiqué dans la revendication 2, caractérisé en ce que le décalage circonférentiel entre les dents de deux supports adjacents (75) de chaque paire correspond à un angle de 6° autour de l'arbre.

4. Un dispositif de scarification et ratissage de gazon tel que revendiqué dans une quelconque des revendications précédentes, caractérisé en ce que chaque dent (74) est retenue en position dans la poche respective (81) sous l'effet de l'empilage d'un support (75) à côté d'un autre.

5. Un dispositif de scarification et ratissage de gazon tel que revendiqué dans une quelconque des revendications précédentes, caractérisé en ce que les saillies (75) se présentent sous la forme de broches (84, 85) et les dents (74) sont montées sur les broches.

6. Un dispositif de scarification et ratissage de gazon tel que revendiqué dans une quelconque des revendications précédentes, caractérisé en ce que chaque poche (81) comporte une paroi courte (82) et une paroi longue (83), et l'extrémité réactive (87) de la dent s'applique contre la paroi longue.

7. Un dispositif de scarification et ratissage de gazon tel que revendiqué dans une quelconque des revendications précédentes, caractérisé en ce que chaque support (75) comporte plusieurs poches (81) dans chacune desquelles est retenue une dent (74).

8. Un ensemble de dents pour un dispositif de scarification et ratissage de gazon, l'ensemble de dents comprenant une pluralité de supports (75) alignés axialement et empilés sur un arbre (70) pour tourner à l'unisson et une pluralité de dents (74), les supports comportant des poches ouvertes (81) et des moyens pour retenir les dents (74) dans les poches ouvertes, les dents comprenant des ressorts hélicoïdaux, s'étendant à l'extérieur des poches (81) et comportant des extrémités actives allongées (86) pour agir sur le gazon pendant l'utilisation de l'ensemble et des extrémités réactives (87), caractérisé en ce que les supports (75) comportent des saillies (85) s'engageant dans des évidements (90) de supports adjacents pour accoupler les supports en vue de leur entraînement à l'unisson, les saillies (85) et les évidements (90) étant positionnés sur les supports (75) de telle sorte que les dents (74) de supports adjacents soient mutuellement décalées circonférentiellement.

9. Un ensemble de dents tel que revendiqué dans la revendication 8, caractérisé en ce que les supports (75) ont tous la même construction, le même décalage circonférentiel étant établi entre les dents (74) de deux supports adjacents de chaque paire.

10. Un ensemble de dents tel que revendiqué dans la revendication 9, caractérisé en ce que le décalage circonférentiel entre les dents de deux supports adjacents (75) de chaque paire correspond à un angle de 6° autour de l'arbre.

11. Un ensemble de dents tel que revendiqué dans une quelconque des revendications 8 à 10, caractérisé en ce que chaque dent (74) est retenue en position dans la poche respective (81) sous l'effet de l'empilage d'un support (75) à côté d'un autre.

12. Un ensemble de dents tel que revendiqué dans une quelconque des revendications 8 à 11, caractérisé en ce que les saillies (75) se présentent sous la forme de broches (84, 85) et les dents (74) sont montées sur les broches.

13. Un ensemble de dents tel que revendiqué dans une quelconque des revendications 8 à 12, caractérisé en ce que chaque poche (81) comporte une paroi courte (82) et une paroi longue (83), et l'extrémité réactive (87) de la dent s'applique contre la paroi longue.

14. Un ensemble de dents tel que revendiqué dans une quelconque des revendications 8 à 13, caractérisé en ce que chaque support (75) comporte plusieurs poches (81) dans chacune desquelles est retenue une dent (74).

FIG. 1.

0 024 696

*FIG. 2*

FIG. 3.

FIG. 4.

FIG. 5

*FIG. 6.*

*FIG. 7.*

0 024 696

FIG. 8.

FIG. 9.

FIG. 10.

FIG. 11.

ROTATION